# EUROPÄISCHE PATENTSCHRIFT

(11) **EP 0 523 206 B1**
(45) Veröffentlichungstag und Bekanntmachung des Hinweises auf die Patenterteilung: **29.03.1995**
(21) Anmeldenummer: 92903081.5
(22) Anmeldetag: 31.01.1992
(51) Int. Cl.: D21F 1/02, G01B 3/00

(54) **MESS- UND ANZEIGE-VORRICHTUNG**
MEASURING AND INDICATING DEVICE
DISPOSITIF DE MESURE ET D'AFFICHAGE

(30) Priorität: 04.02.1991 DE 9101229 U
(43) Veröffentlichungstag der Anmeldung: 20.01.1993
(73) Patentinhaber: J.M. Voith GmbH, D-89522 Heidenheim (DE)
(72) Erfinder: VAN DEN WOLDENBERG, Richard, D-8887 Bachhagel (DE)
(74) Vertreter: Weitzel, Wolfgang, Dr.-Ing.
(86) Internationale Anmeldenummer: EP9200209
(87) Internationale Veröffentlichungsnummer: WO9213996

(56) Entgegenhaltungen:
- EP-A- 0 232 022
- EP-A- 0 290 367
- DE-A- 3 532 715
- US-A- 3 463 701
- US-A- 4 892 623

## Beschreibung

Die Erfindung betrifft eine Meß- und Anzeige-Vorrichtung für die Position eines beweglichen Bauteils relativ zu einer Meßreferenz, im einzelnen mit dem im Oberbegriff des Anspruches 1 angegebenen Merkmalen. Eine derartige Meß- und Anzeige-Vorrichtung findet Anwendung beispielsweise in einem Papiermaschinen-Stoffauflauf zur Messung der Position einer den Papierstoff-Austrittsspalt begrenzenden Leiste oder der Position einer dazugehörenden Leisten-Verstellspindel. Bekanntlich erstreckt sich die genannte Leiste entlang dem Austrittsspalt über die gesamte Maschinenbreite und ist zwecks örtlicher Feinjustierung der lichten Weite des Austrittsspaltes örtlich verformbar. Hierzu sind zahlreiche, über die Maschinenbreite verteilt angeordnete Leisten-Verstellspindeln vorgesehen, die einzeln oder in Gruppen betätigbar sind. Das Verformen der Leiste (an einer bestimmten Stelle) muß mit hoher Präzision erfolgen in sehr kleinen Schritten, die in der Regel kleiner sind als 1/100 mm. Mit der gleichen Präzision muß während des Betriebes mittels einer Meß- und Anzeigevorrichtung an jeder der Verstellspindeln die örtliche Position der Leiste (d.h. ihr Verformungszustand) kontinuierlich gemessen und angezeigt werden.

Aus dem Voith-Prospekt "Stoffaufläufe" (Nr. p 2503) ist es bekannt, daß an jeder der beweglichen Verstellspindeln ein elektrischer Signalgeber angeordnet ist (dort "Wegaufnehmer" genannt), der die Position der Spindel relativ zu einer Meßreferenz mißt. Die Meßreferenz ist dort beispielsweise ein sogenannter Oberlippenträger. Außerdem ist mit der Spindel ein mechanisches Anzeigegerät verbunden. Der elektrische Signalgeber dient zur Fernanzeige der Position der Spindel und somit der örtlichen Position der genannten (den Papierstoff-Austrittsspalt begrenzenden) Leiste, die vorzugsweise als lineal-förmige Blende ausgebildet ist. Der elektrische Signalgeber kann bei Bedarf auch zur Übermittlung der gemessenen Werte an ein Prozeßleitsystem dienen. Das zusätzlich vorhandene mechanische Anzeigegerät dient zum Ablesen der Position unmittelbar an der Maschine.

Das Vorhandensein von zwei Meßgeräten an jeder Verstellspindel hat den Vorteil, daß die elektrisch gemessenen Daten jederzeit durch das vorzugsweise mechanische Anzeigegerät kontrolliert werden können, und daß der Stoffauflauf - auch bei einer Störung der elektrischen Messung - mit Hilfe des mechanischen Anzeigegerätes weiter betrieben werden kann.

Schwierigkeiten bereitet jedoch das sichere Installieren der beiden Meßgeräte derart, daß die gemessenen Werte möglichst exakt übereinstimmen. In dieser Hinsicht soll durch die Erfindung eine Verbesserung geschaffen werden.

Dies gelingt durch die im kennzeichnenden Teil des Anspruches 1 angegebenen Merkmale.

Wesentlich ist, daß das Meßgehäuse des elektrischen Signalgebers an seinen beiden Enden je einen Anschluß für eine starre, aber justierbare Verbindung aufweist, und daß das bewegliche Meßglied des elektrischen Signalgebers und das bewegliche Tastelement des Anzeigegerätes starr (z.B. formschlüssig) miteinander verbunden sind oder zu einem einstückigen Element zusammengefaßt sind. Hierdurch kann man schon bei der Herstellung der Meß- und Anzeige-Vorrichtung das Meßgehäuse des elektrischen Signalgebers und das sogenannte Anzeiger-Gehäuse des Anzeigegerätes derart relativ zueinander positionieren, daß beispielsweise die Null-Stellungen der beiden Geräte exakt miteinander übereinstimmen. Dies wird folgendermaßen erreicht:
Zunächst wird das bewegliche Meßglied des elektrischen Signalgebers an das bewegliche Tastelement des Anzeigegerätes gekoppelt (so daß ihre relative Position zueinander unveränderlich ist). Dann wird das bewegliche Meßglied in dem dazugehörenden Meßgehäuse in diejenige Position gebracht, in welcher der elektrische Signalgeber einen vorbestimmten Wert (z.B. Null) anzeigt. Nun wird durch ein gegenseitiges Justieren, d.h. durch axiales Verschieben des Meßgehäuses relativ zum Anzeiger-Gehäuse, dafür gesorgt, daß auch das Anzeigegerät den vorbestimmten Wert anzeigt. In diesem Zustand werden die beiden Gehäuse starr aneinandergekoppelt, nämlich durch Arretieren der genannten starren, aber justierbaren Verbindung. Von nun an bleiben nicht nur die beiden beweglichen Meßglieder, sondern auch die beiden Gehäuse in einer unveränderlichen gegenseitigen Position.

Außerdem kann nun die gesamte Meß- und Anzeige-Vorrichtung beim Einbau am Bestimmungsort mit Hilfe des zweiten, am Meßgehäuse vorgesehenen Anschlusses relativ zu der betreffenden Meßreferenz justiert und danach in der endgültigen Position festgeklemmt werden. Hierbei dient das Anzeigegerät zum Auffinden der exakten Position der gesamten Meß- und Anzeige-Vorrichtung. Bei diesem Vorgang bleibt also die beim Herstellen justierte relative Position der beiden Gehäuse vollkommen unberührt. Dies gilt auch für ein später eventuell erforderliches Nachjustieren der Meß-und Anzeige-Vorrichtung am Einbauort, falls das bewegliche Bauteil (z.B. die oben erwähnte Leiste oder Blende eines Stoffauflaufs) ausgetauscht werden muß. Sollte es erforderlich sein, daß an einer der zahlreichen Verstellspindeln die Meß- und Anzeige-Vorrichtung wegen einer Störung gegen eine andere ausgetauscht werden muß, so kann dies innerhalb kurzer Zeit während des Betriebes erfolgen.

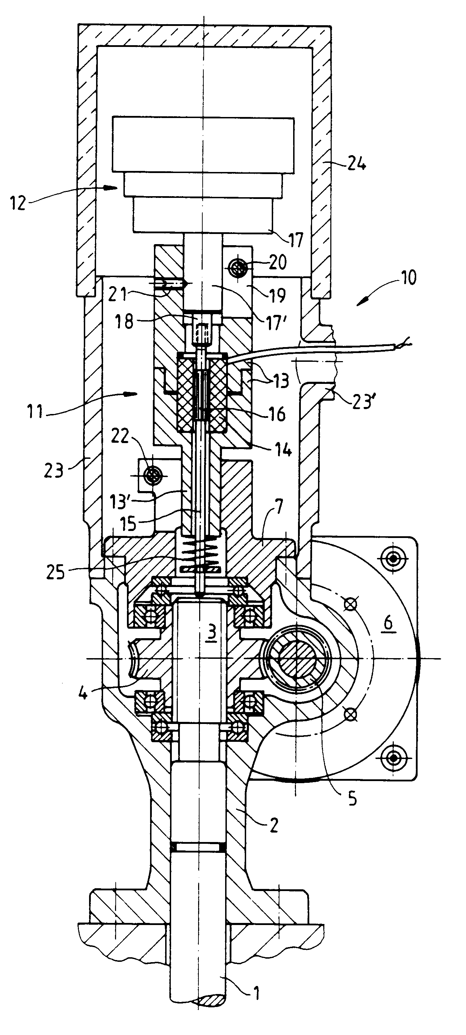

Ein Ausführungsbeispiel der Erfindung wird nachfolgend anhand der Zeichnung beschrieben.

Die Zeichnung zeigt eine zum örtlichen Verformen einer (nicht sichtbaren) Stoffauflauf-Blende dienende Spindel 1, die in einem Getriebegehäuse 2 in Achsrichtung verschiebbar ist. Auf einem Gewindekopf 3 der Spindel 1 ist ein Schneckenrad 4 angeordnet, in das eine Schnecke 5 eingreift. Die Schnecke 5 ist an einen Motor 6 gekoppelt. Das Schneckenrad 4 ist im Getriebegehäuse 2 drehbar, jedoch in Axialrichtung nicht verschiebbar gelagert. Das Getriebegehäuse 2 und ein dazugehörender Gehäusedeckel 7 bilden miteinander die sogenannte Meßreferenz.

Eine insgesamt mit 10 bezeichnete Meß- und Anzeige-Vorrichtung soll die genaue Position der Spindel 1 relativ zur Meßreferenz 2, 7 messen und anzeigen. Hierzu dienen ein elektrischer Signalgeber 11 und ein mechanisches Anzeigegerät 12.

Der elektrische Signalgeber 11 umfaßt ein Meßgehäuse 13 mit einer darin angeordneten Meßspule 14 und ein bewegliches stabförmiges Meßglied 15, das sich entlang der gemeinsamen Längsachse durch den elektrischen Signalgeber erstreckt und im Bereich der Meßspule 14 einen Weicheisenkern 16 aufweist.

Das Anzeigegerät 12 hat ein Anzeiger-Gehäuse 17 mit der üblichen, in der Zeichnung nicht sichtbaren Skala und mit einem ebenso nicht sichtbaren Zeiger, außerdem ein bewegliches Tastelement 18, das entlang der gemeinsamen Längsachse beweglich ist.

Das Meßglied 15 und das Tastelement 18 sind miteinander verschraubt und hierdurch formschlüssig und unverrückbar miteinander verbunden. Alternativ hierzu könnten sie auch als ein einstückiges Element ausgebildet sein. Eine andere Alternative könnte sein, daß die beiden Elemente 15 und 18 lösbar ineinander gesteckt sind und durch Federkraft in formschlüssigem Kontakt zueinander gehalten werden.

Das obere Ende des Meßgehäuses 13 ist als Klemmstück 19 ausgebildet, mit einer koaxialen Bohrung, die eine Verlängerung 17' des Anzeiger-Gehäuses 17 aufnimmt. Mit anderen Worten: Dieses Klemmstück 19 ist ein Anschluß für eine starre, aber justierbare Verbindung des Meßgehäuses 13 mit dem Anzeiger-Gehäuse 17. Nachdem man, wie oben beschrieben, die korrekte relative Position der beiden Gehäuse 13 und 17 gefunden hat, wird die Verbindung durch Anziehen einer Klemmschraube 20 arretiert. Zusätzlich kann eine Sicherungsschraube 21 vorgesehen werden, so daß die relative Position der beiden Gehäuse 13 und 17 nicht mehr veränderbar ist. Somit ist sichergestellt, daß beide Meßgeräte mit hoher Genauigkeit stets gleiche Meßwerte liefern.

In diesem Zustand wird die Meß- und Anzeige-Vorrichtung 10 in das die Meßreferenz bildende Getriebegehäuse 2, 7 eingesetzt. Das Meßgehäuse hat zu diesem Zweck einen Anschluß in Form einer rohrartigen Verlängerung 13'. Außerdem ist der Getriebedeckel 7 in seinem oberen Bereich als Klemmstück ausgebildet mit einer die Verlängerung 13' aufnehmenden koaxialen Bohrung. Hier ist also wiederum eine starre, aber justierbare Verbindung vorgesehen, nämlich zwischen dem Meßgehäuse 13 und der Meßreferenz 2, 7. Zum Auffinden der korrekten relativen Position des Meßgehäuses 13 in der Meßreferenz 2, 7 wird zunächst die Leiste (z.B. Blende) des Stoffauflaufs über ihre gesamte Länge (d.h. über die Maschinenbreite) exakt gerade ausgerichtet. Sodann werden an allen Verstellspindeln die Meßgehäuse 13 derart relativ zur Meßreferenz 2, 7 justiert, daß sämtliche Anzeigegeräte 12 den gleichen Wert (z.B. Null) anzeigen. Nun wird an jedem Meßgehäuse 13 die Verbindung mit der Meßrefernz 2, 7 arretiert durch Anziehen einer Klemmschraube 22.

Das stabförmige bewegliche Meßglied 15 wird durch die Kraft einer Feder an die obere Stirnfläche des Spindelkopfes 3 angedrückt. Die genannte Feder kann z.B. innerhalb des Anzeiger-Gehäuses angeordnet sein oder, wie bei 25 angedeutet, am äußeren Ende der Gehäuseverlängerung 13'.

Zum Schutz der Meß- und Anzeige-Vorrichtung (z.B. gegen Spritzwasser) dient eine am Getriebegehäuse 2 befestigte Hülse 23 mit Kabelanschlußstutzen 23' sowie eine durchsichtige Haube 24. Denkbar ist auch eine am Meßgehäuse 13 flüssigkeitsdicht befestigte Hülse (nicht dargestellt).

Als Meßreferenz muß nicht unbedingt das Getriebegehäuse 2, 7 verwendet werden. Statt dessen kann (gemäß Patentanmeldung P 41 03 259.4, Akte: P 4798) ein Rohr vorgesehen werden, das sich durch die (in diesem Falle hohle) Spindel bis in den leistennahen Bereich des Stoffauflaufs erstreckt und dort starr mit einem als Meßreferenz dienenden Bauteil verbunden ist. Das Meßglied 15 erstreckt sich in diesem Falle durch das Innere des genannten Rohres bis unmittelbar zur Leiste.

Die erfindungsgemäße Meß- und Anzeige-Vorrichtung 10 muß nicht unbedingt koaxial zur Spindel 1 angeordnet sein. Vielmehr kommt z.B. auch eine Anordnung der Vorrichtung 10 neben dem Getriebegehäuse 2 und parallel zur Spindelachse in Betracht.

## Patentansprüche

1. Meß- und Anzeige-Vorrichtung (10) für die Position eines beweglichen Bauteils relativ zu einer Meßreferenz, z.B. für die Position einer den Austrittsspalt eines Papiermaschinen-Stoffauflaufs begrenzenden Leiste oder einer dazugehörenden Leisten-Verstellspindel (1), mit einem elektrischen Signalgeber (11) und mit einem Anzeigegerät (12) sowie mit den folgenden Merkmalen:
a) in einem Meßgehäuse (13) sind der stationäre Teil (z.B. Meßspule 14) des elektrischen Signalgebers (11) und ein Meßglied (15) angeordnet, das entlang einer Längsachse beweglich ist;
b) das Anzeigegerät (12) umfaßt ein Anzeiger-Gehäuse (17) und ein Tastelement (18), das entlang einer Längsachse beweglich ist;
c) das Meßgehäuse (13) und das Anzeiger-Gehäuse (17) sind mit der Meßreferenz (2, 7) starr verbindbar;
d) das bewegliche Meßglied (15) und das bewegliche Tastelement (18) sind mit dem genannten beweglichen Bauteil (1) starr verbindbar;
gekennzeichnet durch die folgenden weiteren Merkmale:
e) das Meßgehäuse (13) des elektrischen Signalgebers (11) hat im Bereich seiner Längsachse zwei Anschlüsse (13', 19) für je eine starre, aber justierbare Verbindung einerseits mit dem Anzeiger-Gehäuse (17) und andererseits mit der Meßreferenz (2, 7);
f) das bewegliche Meßglied (15) und das bewegliche Tastelement (18) sind starr (z.B. formschlüssig) miteinander verbunden.

2. Meß- und Anzeige-Vorrichtung nach Anspruch 1, dadurch gekennzeichnet, daß das Anzeigegerät (12) wie an sich bekannt ein mechanischer Meßwert-Anzeiger ist.

3. Meß- und Anzeige-Vorrichtung nach Anspruch 1 oder 2, dadurch gekennzeichnet, daß der elektrische Signalgeber (11) und das Anzeigegerät (12), wie an sich bekannt, eine mittlere Null-Stellung und daran anschließende Positiv- und Negativ-Bereiche aufweisen.

4. Meß- und Anzeige-Vorrichtung nach einem der Ansprüche 1 bis 3, dadurch gekennzeichnet, daß das Meßgehäuse (13) und das Anzeiger-Gehäuse (17) zueinander koaxial angeordnet sind.

5. Meß- und Anzeige-Vorrichtung nach Anspruch 4, dadurch gekennzeichnet, daß das bewegliche Meßglied (15) und das bewegliche Tastelement (18) zu einem einstückigen Element zusammengefaßt sind.

## Claims

1. A measuring and indicating device (10) for the position of a moveable component in relation to a measurement reference, e.g. for the position of a bar limiting the discharge nip of a paper machine head box or an associated bar-adjusting spindle (1), having an electric signal transmitter (11) and having an indicating instrument (12) and also with the following features :
a) the stationary part (e.g. measuring coil 14) of the electric signal transmitter (11) and a measuring component (15), which can move along a longitudinal axis, are disposed in a measurement housing (13);
b) the indicating instrument (12) comprises an indicator housing (17) and a touch component (18) which can move along a longitudinal axis;
c) the measurement housing (13) and the indicator housing (17) are rigidly connected to the measurement reference (2, 7);
d) the moveable measuring component (15) and the moveable touch component (18) can be rigidly connected with the said moveable component (1);
**characterised by** the following features :
e) in the region of its longitudinal axis the measurement housing (13) of the electric signal transmitter (11) has two connection pieces (13', 19) for a rigid, but adjustable, connection firstly with the indicator housing (17) and secondly with the measurement reference (2, 7);
f) the movable measuring component (15) and the movable touch component (18) are rigidly connected to one another (e.g. interlocked).

2. A measuring and indicating device according to Claim 1,
**characterised in that** the indicating instrument (12) is a mechanical measured value indicator as per se known.

3. A measuring and indicating device according to Claim 1 or 2,
**characterised in that** the electric signal transmitter (11) and the indicating instrument (12), as per se known, have a central zero position and positive and negative regions connected thereto.

4. A measuring and indicating device according to one of Claims 1 to 3,
**characterised in that** the measurement housing (13) and the indicator housing (17) are disposed coaxially in relation to one another.

5. A measuring and indicating device according to Claim 4,
**characterised in that** the moveable measuring component (15) and the moveable touch component (18) are combined to form a single-piece component.

## Revendications

1. Dispositif de mesure et d'affichage (10) de la position d'un composant mobile par rapport à une référence de mesure, par exemple de la position d'une réglette limitant l'interstice de sortie d'une caisse de tête d'une machine à papier ou d'un axe ajustable (1) faisant partie des réglettes, pourvu d'un générateur de signaux (11) et d'un appareil indicateur (12), comportant les dispositions suivantes :
a) la pièce fixe (par exemple bobine étalon (14)) du générateur électrique de signaux (11) et un organe de mesure (15) sont disposés dans un boîtier de mesure (13) qui est mobile le long d'un axe longitudinal,
b) l'appareil indicateur (12) comprend un boîtier (17) de l'appareil indicateur et un élément palpeur (18) qui est mobile le long d'un axe longitudinal,
c) le boîtier de mesure (13) et le boîtier de l'indicateur (17) sont reliables de façon rigide à la référence de mesure (2,7),
d) l'organe mobile de mesure (15) et l'élément palpeur mobile (18) sont reliables de façon rigide au composant mobile sus-nommé,
caractérisé en ce que :
e) le boîtier de mesure (13) du générateur électrique de signaux (11) comporte dans la zone de son axe longitudinal deux raccordements (13',19) formant chacun un raccordement rigide mais ajustable d'une part avec le boîtier d'indicateur (17) et d'autre part avec la référence de mesure (2,7),
f) l'organe mobile de mesure (15) et l'élément palpeur mobile (18) sont reliés ensemble de façon rigide (par exemple par assemblage rigoureux);

2. Dispositif de mesure et d'affichage selon la revendication 1, caractérisé en ce que l'appareil indicateur (12) est connu en soi comme un indicateur mécanique de mesure;

3. Dispositif de mesure et d'affichage selon la revendication 1 ou 2, caractérisé en ce que le générateur électrique de signaux (11) et l'appareil indicateur (12), présentent, comme il est connu en soi, une position de repos intermédiaire entre des zones négatives et positives;

4. Dispositif de mesure et d'affichage selon l'une des revendications 1 à 3, caractérisé en ce que le boîtier de mesure (13) et le boîtier d'indicateur (17) sont disposés coaxialement l'un par rapport à l'autre;

5. Dispositif de mesure et d'affichage selon la revendication 4, caractérisé en ce que l'organe mobile de mesure (15) et l'élément palpeur mobile (18) sont réunis en une seule pièce.
